Europäisches Patentamt

(19) European Patent Office

Office européen des brevets

(11) Publication number: **0 003 723**
**B1**

## (12) EUROPEAN PATENT SPECIFICATION

(45) Date of publication of patent specification: **12.05.82**

(21) Application number: **79850006.2**

(22) Date of filing: **30.01.79**

(51) Int. Cl.³: **F 24 J 3/04, F 24 D 11/02**
**//F25B7/00**

(54) **Method and apparatus for heating by heat pumping.**

(30) Priority: **31.01.78 SE 7801136**

(43) Date of publication of application:
**22.08.79 Bulletin 79/17**

(45) Publication of the grant of the patent:
**12.05:82 Bulletin 82/19**

(84) Designated Contracting States:
**BE CH DE FR GB IT NL**

(56) References cited:
**DE - C - 330 378**
**FR - A - 2 296 829**
**GB - A - 894 011**
**US - A - 2 242 588**
**US - A - 2 428 876**
**US - A - 2 707 869**
**US - A - 3 139 924**
**US - A - 3 157 227**

(73) Proprietor: **SINTAB SWEDINVENTOR AB**
**Södra Bulltoftavägen 17**
**S-212 22 Malmö (SE)**

(72) Inventor: **Wahlgren, Lars Östen**
**Spegelbäcksgatan 8**
**S-216 20 Malmö (SE)**

(74) Representative: **Ström, Tore et al,**
**c/o Ström & Gulliksson AB Rundelsgatan 14**
**S-211 36 Malmö (SE)**

Courier Press, Leamington Spa, England.

## Method and apparatus for heating by heat pumping

The present invention relates to a method for heating by means of heat pumping, and an apparatus for working the method.

The object of the invention is to reduce today's requirement of e.g. fuel oil for heating houses, apartment houses, factories, department stores, offices, greenhouses, etc., in relation to conventional heating systems.

In the method according to the invention the heat pumping is effected in two separate pump stages, the heat of condensation of the first stage being supplied to the second stage as the heat of vaporization as is previously known e.g. through the German patent specification No. 330,378.

The novel and characterizing feature of the method of the invention is that air is recirculated in a closed circuit in a heat-insulated space which has a substantially adiabatic relationship to the surroundings thereof and includes the condenser of the first stage and the evaporator of the second stage as well as the compressors and the drive machinery of the stages, said recirculated air being the heat carrier between the pump stages, absorbing heat dissipating from the compressors and drive machinery, and supplying the heat thus absorbed together with the heat of condensation of the first stage to the evaporator of the second stage at different pressure and temperature gradients in the two stages which are thermodynamically dimensioned in such a way that the total of the heat of condensation of the first stage plus the dissipated heat absorbed equals the heat of vaporization of the second stage.

By the method of the invention it is achieved that energy losses normally arising in a heating system, viz. heat dissipation from engines, compressors, transmissions, fans, etc., are saved by being absorbed by the recirculated air and supplied to the second pump stage.

The apparatus for working said method is characterized in that it comprises two heat pumps each with a compressor, a condenser and an evaporator, that the compressors and the drive engine or engines thereof are located in a heat-insulated space having a substantially adiabatic relationship to the surroundings thereof, and that means are provided for recirculating air in a closed circuit through the space, the condenser of one heat pump and the evaporator of the other heat pump being located in the circulation circuit. An apparatus of this kind can be built up of reliable components and can be tailored to the heat requirement when projecting each specific case.

A heat pump can be defined in the simplest way as an apparatus which under the sacrifice of an energy quantity $E_t$, e.g. mechanical work, pumps a heat quantity $Q_2$ from a lower temperature $t_2$ to a higher temperature $t_1$ and supplies the energy together with the pump work $E_t$ at said higher temperature. The heat quantity $Q_1$ supplied at the temperature $t_1$ will thus equal the total of the heat quantity $Q_2$ absorbed and the work $E_t$ supplied.

According to the law of the undestructibility of the energy, the "pump energy" plus the heat absorbed must thus equal the heat quantity supplied at the higher temperature.

Basically, a heat pump is of the same construction as a refrigerating apparatus but in the operation thereof the heat output $Q_1$ at the temperature $t_1$ is of primary interest. Therefore, it can be established that the operating economy of the heat pump generally must be entirely dependent on the operating economy of the drive source thereof. In other words, the operating economy is a function of the energy sacrificed in relation to the output heat.

Assume that a heat pump is operated by an electric motor as the drive source. This system usually has a high thermal coefficient $\Phi_t$ when $t_1$ and $t_2$, respectively, are close to each other, but if we study the energy conditions of the electric motor and integrate all factors in the operating economy of the system the result will be rather discouraging.

Another example which still clearer illustrates these conditions is a heat pump driven by a compression-ignition engine because the total power fuel source is in close contact with the system. Notwithstanding a high thermal coefficient $\Phi_t$ it can easily be shown that more than 50 per cent of the energy available is lost to the surroundings as energy destruction although the cooling water losses are being recovered to the system.

In the method according to the invention these energy losses can be eliminated nearly completely by integrating the heat losses of the drive source in a natural way into the heat pump system, said heat losses participating as an important factor in the operation of the heat pump system. Moreover, the system allows a relatively great difference between the temperature $t_2$ at which heat is being absorbed, and the temperature $t_1$ at which heat is being supplied, a high thermal coefficient $\Phi_t$ being maintained without specific arrangements for supplementary heat.

The invention will be described in more detail below reference being made to the accompanying drawings in which

Figure 1 is a somewhat diagrammatic plan view of an apparatus for working the method according to the invention, arranged in a building;

Figure 2 is a basic flow diagram illustrating the energy flow when applying the method according to the invention;

Figure 3 is a vertical cross-sectional view of an apparatus for working the method according to the invention, arranged as a self-contained unit; and

Figure 4 is a plan view of the apparatus of Figure 3.

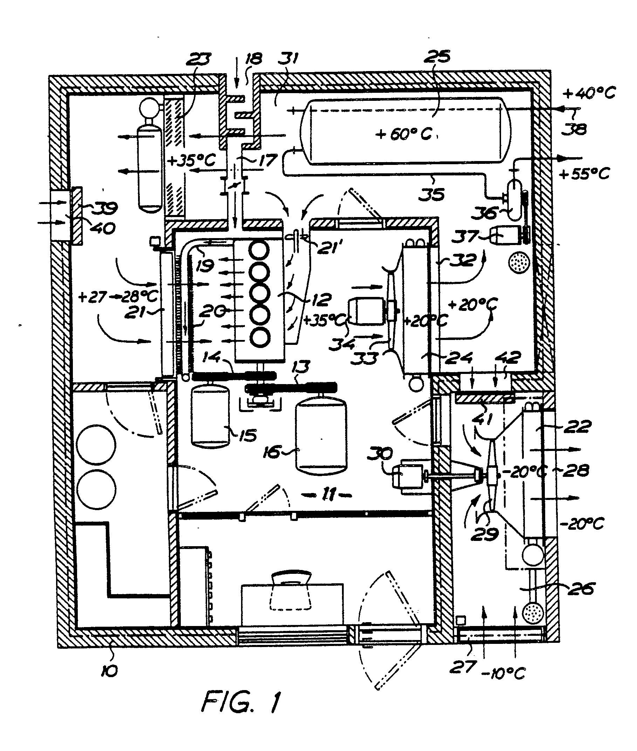

In Figure 1 there is shown a machine room 10 which can comprise a separate building or can be a space in a large building. This machine room is heat-insulated such that it has practically an adiabatic relationship to the surroundings thereof. In a space 11 in the machine room there is arranged an air-cooled compression-ignition engine 12 which is drivingly connected by belt transmissions 13 and 14 to a compressor 15 and a compressor 16. The fresh air intake 17 of the engine is provided with a silencer 18 of the labyrinth type and the exhaust pipe 19 thereof is provided with fins 20 opposite to an opening 21 in the wall of the space 11. Also an air intake 21' is provided in this wall, a fan for air-cooling the engine being arranged in said intake.

The two compressors form part of two heat pump stages. The heat pump stage having the compressor 15 associated therewith comprises an evaporator 22 and a condenser 23, while the compressor 16 forms part of a heat pump stage having an evaporator 24 and a condenser 25. As will be understood, the compressor, evaporator and condenser of each heat pump stage are interconnected in series by piping, not shown, in a conventional way well known in the art for circulating refrigerating fluid in a closed circuit through said system. The fluid is pressurized by the compressor for condensation in the condenser and is then evaporated in the evaporator from which it is again supplied to the compressor.

The evaporator 22 associated with the compressor 15 is located in a separate space 26 outside the machine room 10, and an air intake 27, preferably controlled by a shutter, is provided for the supply of fresh air to the space 26. The evaporator 22 is located in an opening 28, and a fan 29 the electric drive motor 30 of which is located in the space 11 is operated to force an air flow from the surroundings through the air intake 27 via the evaporator 22 and then back to the surroundings through the opening 28. The condenser 23 associated with the compressor 15 is located in a space 31 wherein also the condenser 25 is located, and this space communicates through the opening 21 and a further opening 32 with the space 11. The evaporator 24 is located in the proximity of the opening 32, and a fan 33 with a drive motor 34 is provided in the space 11 in connection with the evaporator 32 to force an air flow from the space 11 into the space 31 and via the condenser 23 back to the space 11 through the opening 21. The air passing through said latter opening sweeps over the finned pipe 20.

The condenser 25 is provided with an output conduit 35 for a secondary heat water circuit including a circulating pump 36 with an associated electric drive motor 37, and this conduit 35 can be extended for heating one or more houses. The return conduit of the secondary circuit is designated 38.

In the space 31 there is provided an opening 40 in the wall of the machine room 10, said opening being provided with a gate type shutter 39 and provides for the supply of fresh air from the surroundings. An opening 42 having a gate type shutter 41 is provided between the spaces 31 and 26 so that the fan 29 can draw air from the surroundings through the space 31. The gates 39 and 41 are interconnected so as to be opened and closed simultaneously. When the air intake 27 controlled by the associated shutter is closed warm air can be blown through the evaporator 22 from the space 31 for defrosting the evaporator should it be frosted.

The compressors 15 and 16 preferably are of the piston type having automatic unloading at the start and automatic thermostatic capacity control of the step type for all pistons. The compressor 15 preferably operates with the refrigerating fluid R22 and the compressor 16 with the refrigerating fluid R12.

The power source for the common operation of the compressors can comprise an air-cooled compression-ignition engine as described above, but a watercooled compression-ignition engine or other internal combustion engine such as an internal combustion engine driven by methanol, or a gas turbine can of course be provided. However, the air-cooled compression-ignition engine is particularly well suited as a power source because the energy losses of this type of motor in a manner which is natural for the system are isentropically transferred to the air quantity recirculating in the machine room without the necessity of providing extensive specific arrangements. Moreover, the air-cooled compression-ignition engine is a reliable engine having a long life particularly when it is operated at a constant rotational speed as in the present case.

In a modification of the invention, part of the heat dissipating from the drive machinery and the compressors can be supplied to the condenser 25 of the second stage directly by means of a separate heat exchange circuit. Thus, when a water-cooled internal combustion engine is being used in the system the cooling circuit thereof can be arranged in heat exchanging relationship with the secondary circuit 35, 36, 38 of the condenser 25 while the rest of the dissipated heat is absorbed by the recirculating air.

The distribution of the shaft power of the engine to the two compressors of the heat pump stages 16—24—25 and 15—22—23, respectively, is determined according to the following dimensional basis:

The total of the heat $Q_{1B}$ of condensation of the pump stage 15—22—23 plus all heat quantities arising due to the energy losses shall equal the heat of vaporization (or heat

absorption) $Q_{2A}$ of the pump stage 16—24—25.

In order to make it possible to dimension the two stages in a manner which meets the conditions recited above two practical requirements for the lay-out of the system must be met:

1. The evaporator 24 in the compressor 16 of one heat pump stage and the compressor 15 and the condensor 23 of the other heat pump stage as well as the common engine 12 thereof must be located in a machine room 10 provided with mechanical recirculation of the air in the room.

2. The machine room 10 must be carefully insulated so that there is provided a practically adiabatic relationship to the surroundings.

The evaporator 22 can be an evaporator for direct expansion of the refrigerating fluid used therein, such as R22, which is made of copper piping having corrugated aluminium ribs; the minimum rib spacing according to experience should be about 8 mm. The evaporator should be provided with a bottom tank and drainage for defrosting. As the heat pump stage 15—22—23 wherein said evaporator is included is a heat-absorbing step in the sense that the evaporator 22 operates at a temperature $t_2$ of vaporization which is close to the outside temperature, the maximum difference between the temperature of vaporization and the temperature of discharged air should be 4°C. The evaporator surface should be heavily over-dimensioned in order to allow a heavy ice coating so that the need of defrosting is reduced. The defrosting can take place in the manner described above.

The condenser 23 included in the heat pump stage 15—22—23 can be made of copper piping having corrugated aluminium ribs and a recipient for the total quantity of refrigerating fluid. The under-cooling preferably can be 4 to 5°C.

The heat pump stage 16—24—25 is the heat output step and operates at a larger capacity and a higher temperature of vaporization than the stage 15—22—23. The evaporator 24 can also be an evaporator for direct expansion of the refrigerating fluid, which is made of copper piping having corrugated aluminium ribs. The maximum difference between the temperature of vaporization and the temperature of the discharged air also in this case should be 4°C.

The condenser 25 which is water-cooled by means of the circulation circuit 35—36—38 can comprise a so-called shell and coil condenser which is dimensioned for a maximum temperature difference of 4°C over the coil at full capacity.

The evaporator 22 shall of course be located outside the machine room 10 in direct contact with the surrounding air, while the condenser 25 when water-cooled preferably is located inside the machine room. When this condenser is arranged for air-cooling by means of a fan, which also is possible for example at forced air conditioning of a large factory, a department store or a greenhouse the condenser 25 is of course located outside the machine room in the same way as the evaporator 22.

The operation of the apparatus described can be summarized as follows:

The stage 15—22—23 absorbs the heat quantity $Q_{2B}$ from the surrounding air and supplies the heat quantity $Q_{1B}$ to the recirculation air in the machine room. Then, to the heat quantity $Q_{1B}$ all energy losses dissipated isentropically in the machine room and corresponding to the heat quantity $\Sigma q$ are added.

The step 16—24—25 absorbs the heat quantity $Q_{1B}+\Sigma q$ from the recirculating air in the machine room and then supplies the output heat quantity $Q_{1A}$ for heating purposes.

Calculation of the energy requirement in order to satisfy a predetermined heat requirement at different surrounding temperatures has shown that the energy requirement of the apparatus described can be reduced to 48 per cent at an outside temperature of −10°C and to 40 per cent at an outside temperature of ±0°C as compared with conventional heating systems. This comparison is based on figures obtained from Statens Industriverk (The Industrial Office of the Swedish Government) at the turn of the year 1976—1977 according to which the efficiency of ordinary furnace systems is calculated to 70 per cent and for big systems as in apartment houses can amount to 75 per cent.

For illustrating the invention, the temperatures at which the apparatus can operate at an outside temperature of −10°C in order to obtain a maximum output heating effect of 2,514,000 kJ/h have been indicated in Figure 1.

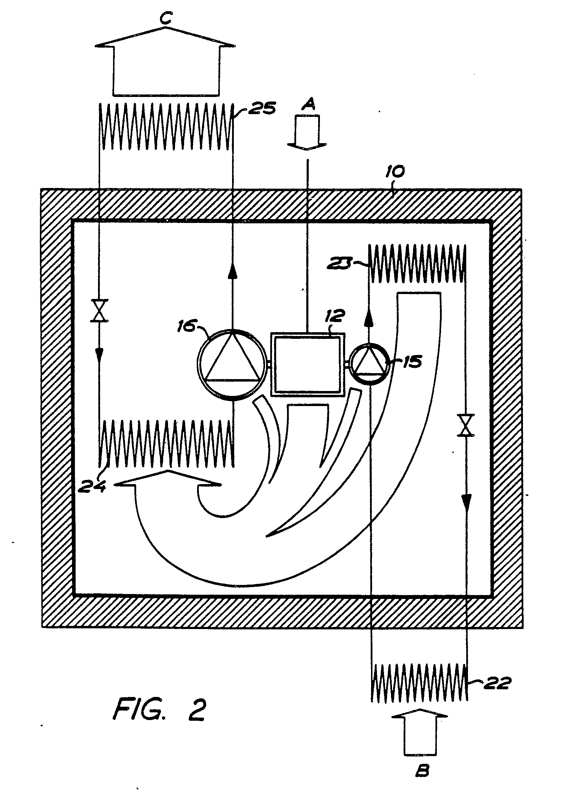

Figure 2 illustrates in a simple and easily comprehensive manner the operation of the heat pump system. Oil or gas is supplied to the engine 12 as indicated by an arrow A for operating the engine, and air from the surroundings is circulated through the evaporator 22 of the first heat pump stage as indicated by an arrow B. In the heat-insulated machine room 10 which has a substantially adiabatic relationship to the surroundings, air is recirculated as indicated by the big branched arrow in the machine room, for supplying heat from the engine 12, from the compressors 15 and 16 of the two heat pump stages and from the condenser 23 of one heat pump stage to the evaporator 24 of the other heat pump stage, while the useful heat is delivered from the condenser 25 of said latter stage as indicated by an arrow C.

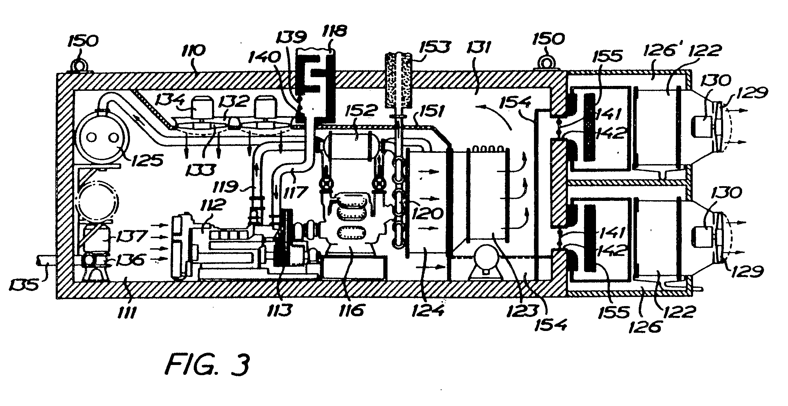

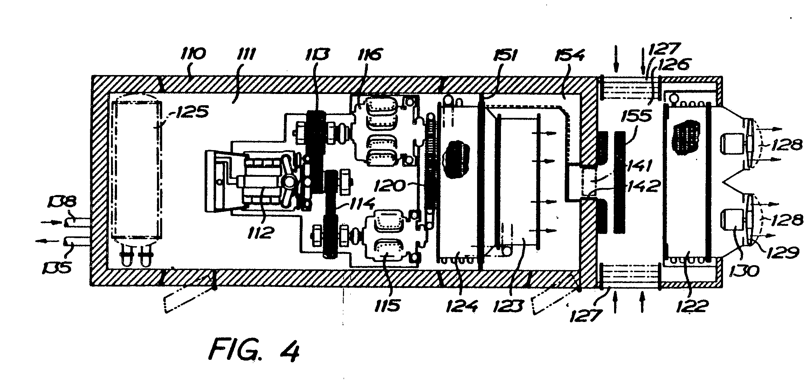

In Figures 3 and 4 the same reference numerals are used as in Figures 1 and 2 but with 100 added for elements which are counterparts to each other. Apart from the fact that some elements are duplicated the arrangement shown in Figures 3 and 4 is basically the same as that shown in Figure 1, and the embodiment of Figures 3 and 4 will be described in more detail only as far as more substantial deviations are concerned. The machine room 110 in this case is constructed as a box which can be lifted at eye bolts 150 so as to be easily transported. The spaces 111 and 131 are separated by a partition wall 151 and are heat-insulated to the surroundings while the space 126 need not be insulated.

The air intake 117 of the engine 112 which is assumed to be water-cooled in this case is connected directly to the engine and the opening 140 with the shutter 139 is provided in the wall of the silencer 118 for the supply of fresh air from the surroundings. The exhaust pipe 119 of the engine extends via a pre-silencer 152 to form a finned loop 120 in front of the evaporator 124 which is located at one side of the partition wall 151 and is structurally connected with the condenser 123 at the other side of the partition wall. The exhaust pipe 119 then opens into the surroundings via a silencer 153. The fans 133 with the drive motors 134 thereof are arranged in the associated openings 132 in the partition wall 151.

The condenser 125 is located in the space 111 and not in the space 131 corresponding to the space 31 in Figure 1 wherein the condenser 25 is located.

In Figures 3 and 4 lower and upper spaces 126 and 126', respectively, correspond to the space 26 in Figure 1. Each space 126 and 126' has a fan 129, an air intake 127 and a defroster opening 142 having a shutter 141. The defroster openings 142 are connected to the space 111 through a conduit 154 extending through the space 131, and silencer baffles 155 are associated with the openings 142 and are arranged in the spaces 126. The shutters 139 and 141 of the defroster openings 140 and 142 are normally closed but are opened for sucking warm air through the evaporator 122 when it is to be defrosted.

As to the rest of the embodiment of Figures 3 and 4, this embodiment would be easily understood by way of the description of the embodiment of Figure 1 regarding the lay-out of the system and the operation thereof.

## Claims

1. Method for heating by means of heat pumping wherein the heat pumping is effected in two separate pump stages (15—22—23, 16—24—25; 115—122—123, 116—124—125) the heat of condensation of the first stage (15—22—23; 115—122—123) being supplied to the second stage (16—24—25; 116—124—125) as the heat of vaporization, characterized in that air is recirculated in a closed circuit in a heat-insulated space (10; 110) which has a substantially adiabatic relationship to the surroundings thereof and includes the condenser (23; 123) of the first stage and the evaporator (24; 124) of the second stage as well as the compressors (15, 16; 115, 116) and the drive machinery (12, 13, 14; 112, 113, 114) thereof, said recirculated air being the heat carrier between the pump stages, absorbing heat dissipating from the compressors and drive machinery, and supplying the heat thus absorbed together with the heat of condensation of the first stage to the evaporator (24; 124) of the second stage at pressure and temperature gradients which are thermodynamically dimensioned in such a way that the total of the heat of condensation of the first stage plus the dissipated heat absorbed equals the heat of vaporization of the second stage.

2. Method according to claim 1, characterized in that one stage (15—22—23; 115—122—123) is operated at a lower temperature of vaporization, preferably a temperature close to the temperature of the surroundings, than the other stage (16—24—25; 116—124—125).

3. Apparatus for working the method according to claim 1 or 2, characterized in that it comprises two heat pumps (15—22—23, 16—24—25; 115—122—123, 116—124—125) each with a compressor (15, 16; 115, 116), a condenser (23, 25; 123, 125) and an evaporator (22, 24; 122, 124), that the compressors and the drive engine or engines (12; 112) thereof are located in a heat-insulated space (10; 110) having a substantially adiabatic relationship to the surroundings thereof, and that means (33, 34; 133, 134) are provided for recirculating air in a closed circuit through the space, the condenser (23; 123) of one heat pump (15—22—23; 115—122—123) and the evaporator (24; 124) of the other heat pump (16—24—25; 116—124—125) being located in the circulation circuit.

## Revendications

1. Procédé de chauffage par pompage de chaleur ou le pompage de la chaleur est effectué en deux étages de pompes separés (15—22—23, 16—24—25; 115—122—123, 116—124—125), la chaleur de condensation du premier étage (15—22—23; 115—122—123) etant fournie au second étage (16—24—25; 116—124—125) en tant que chaleur de vaporisation, caracterisé en ce que l'air est remis en circulation dans un circuit fermé dans un espace isolé thermiquement (10; 110), qui presente une relation sensiblement adiabatique avec son environnement et comprend la condenseur (23; 123) du premier étage et l'evaporateur (24; 124) du second étage ainsi que les compresseurs (15, 16; 115, 116) et leur machine d'entrainement (12, 13, 14; 112, 113, 114), l'air remis en circulation etant le porteur de chaleur entre les étages de pompes, absorbant l'air dissipé par les compresseurs et la machine d'entrainement, et fournissant la chaleur ainsi absorbée en même temps que la chaleur de condensation du premier étage a l'evaporateur (24; 124) du second étage à des gradients de pression et de temperature qui sont thermodynamiquement dimensionnés d'une façon telle que la somme de la chaleur de condensation du premier étage et de la chaleur dissipée qui est absorbée est égale à la chaleur de vaporisation du second étage.

2. Procédé selon la revendication 1, characterisé en ce qu'un étage (15—22—23; 115—122—123) est actionné à une temperature de vaporisation inférieure, de preférence à une temperature proche de la temperature de l'environnement, à celle de l'autre étage (16—24—25; 116—124—125).

3. Dispositif d'application du procédé selon les revendications 1 ou 2, caracterisé en ce qu'il comprend deux pompes à chaleur (15—22—23, 16—24—25; 115—122—123, 116—124—125), equipées chacune d'un compresseur (15, 16; 115, 116), d'un condenseur (23, 25; 123, 125) et d'un evaporateur (22, 24; 122, 124), en ce que les compresseurs et le moteur ou les moteurs d'entrainement (12; 112) de ces derniers sont situés dans un espace isolé thermiquement (10; 110) ayant une relation sensiblement adiabatique avec son environnement, et en ce que des moyens (33, 34; 133, 134) sont prévus pour la remise en circulation de l'air dans un circuit fermé par l'intermediare dudit espace, la condenseur (23; 123) de l'une des pompes à chaleur (15—22—23; 115—122—123) et l'evaporateur (24; 124) de l'autre pompe à chaleur (16—24—25; 116—124—125) etant situés dans le circuit de circulation.

## Patentansprüche

1. Heizverfahren mittels Wärmepumpen, wobei das Wärmepumpen in zwei separaten Pumpen-Stufen (15—22—23, 16—24—25; 115—122—123, 116—124—125) zirkuliert wird und Kondensationswärme der ersten Stufe (15—22—23; 115—122—123) als Verdampfungswärme in die zweite Stufe (16—24—25; 116—124—125) eingespeist wird, dadurch gekennzeichnet, dass Luft in einem geschlossenen Kreislauf geführt wird und zwar in einem wärmeisolierten Raum (10; 110), der in einer im wesentlichen adiabitschen Beziehung zu seiner Umgebung steht und den Kondensator (23; 123) der ersten Stufe sowie den Verdampfer (24; 124) der zweiten Stufe, die Kompressoren (15, 16; 115, 116) und die Antriebsmaschinerie (12, 13, 14; 112, 113, 114) davon umfasst, wobei die zirkulierte Luft als Wärmeträger zwischen den Pumpenstufen benutzt wird, indem sie die von den Kompressoren und der Antriebsmaschinerie abgegebene Wärme aufnimmt, und die so aufgenommene Wärme zusammen mit der Kondensationswärme der ersten Stufe dem Verdampfer (24; 124) der zweiten Stufe zuführt, und zwar bei Druck und Temperaturgradienten, die thermodynamisch in einer solchen Weise dimensioniert sind, dass die Summe der Kondensationswärme der ersten Stufe und der abgegebenen und von der Luft aufgenommenen Wärme gleich der Verdampfungswärme der zweiten Stufe ist.

2. Verfahren nach Anspruch 1, dadurch gekennzeichnet, dass eine Stufe (15—22—23; 115—122—123) bei einer niedrigeren Verdampfungstemperatur betrieben wird, vorzugsweise bei einer nahe der Umgebungstemperatur liegenden Temperatur, als die andere Stufe (16—24—25; 116—124—125).

3. Vorrichtung zur Durchführung des Verfahrens nach Anspruch 1 oder 2, dadurch gekennzeichnet, dass zwei Wärmepumpen (15—22—23, 16—24—25; 115—122—123, 116—124—125) jeweils mit einem Kompressor (15, 16; 115, 116), einem Kondensator (23, 25; 123, 125) und einem Verdampfer (22, 24; 122, 124) vorgesehen sind, dass die Kompressoren und deren Antriebsmaschine oder Maschinen (12; 112) in einem värmeisolierten Raum (10; 110) angeordnet sind, der in einer im wesentlichen adiabatischen Bezeihung zu seiner Umgebüng steht, und dass Mittel (33, 34; 133, 134) vorgesehen sind, die Luft in einem geschlossenen Kreislauf durch den Raum zirkulieren lassen, wobei der Kondensator (23; 123) einer Wärmepumpe (15—22—23; 115—122—123) und der Verdampfer (24; 124) der anderen Wärmepumpe (16—24—25; 116—124—125) in dem Zirkulationskreislauf angeordnet ist.

FIG. 1

FIG. 2

FIG. 3

FIG. 4

0 003 723